# EUROPEAN PATENT SPECIFICATION

(11) **EP 2 857 194 B1**
(45) Date of publication and mention of the grant of the patent: **09.09.2020**
(21) Application number: 13425135.4
(22) Date of filing: 03.10.2013
(51) Int. Cl.: B32B 27/08, B32B 27/18, B32B 27/32, B32B 27/20, C08K 9/06

(54) **MULTIWALL SHEETS**
MEHRWANDIGE FOLIEN
FEUILLES MULTIPAROIS

(43) Date of publication of application: 08.04.2015
(73) Proprietor: Ondaplast S.p.a., 47020 Longiano FC (IT); Alma Mater Studiorum - Università di Bologna, 40126 Bologna (IT)
(72) Inventor: Paolucci, Fabrizio, 47043 Gatteo FC (IT); Boghi, Claudio, 47020 Longiano FC (IT); DI Credico, Francesco, 40068 SAN Lazzaro DI Savena BO (IT); Celli, Annamaria, 47122 Forli' (IT)
(74) Representative: Modiano, Micaela Nadia

(56) References cited:
- WO-A1-93/04118
- WO-A2-2007/136761
- DE-A1- 3 505 923
- DE-A1- 19 545 896
- DE-U1- 29 601 848
- US-A1- 2006 094 810

## Description

### Technical field of the invention

The invention relates to a multiwall sheet comprising a composition comprising polyolefin matrices and nanoclays.

The invention relates also to a process for preparing said multiwall sheet.

### Background of the invention

Polymer-based nanocomposite materials are polymers whose characteristics (mechanical, thermal, optical) can be modified conveniently by mixing with nanofillers, i.e., fillers constituted by particles with a size of less than 100 nm. These fillers are generally distinguished by their shape or more precisely their shape ratio. When a nanofiller is added, the material assumes characteristics that are different from those of the unaltered polymer or filler, since its properties are dictated by the characteristics of the interface and by the degree of dispersion. Generally, with the addition of nanofillers one attempts to improve the performance of the product, such as for example:
i) rigidity, which if it is high enough allows replacing metallic parts with polymeric compounds, which are much lighter and easier to manufacture industrially and are therefore cheaper;
ii) impermeability to gases and vapors, which would allow obtaining new high-performance products instead of two-part materials that are difficult to process and recycle;
iii) resistance to abrasion, which is usually very low, especially in polyolefins.

The use of nanoclays to be mixed with polymers is of particular interest. The lamellar structure of these compounds gives particular characteristics to the product, such as for example a reduced permeability to gases.

The main applications of nanocomposite materials refer to the automotive sector, to the packaging sector (as in the case of high-barrier plastic beer bottles) or to the agricultural sector (for example the provision of nanocomposite films for covering greenhouses).

The use of these nanocomposite materials in the field of multiwall sheets is not known. DE 296 01 848 U1 discloses a thermoplastic composition for production of multiwall sheets, consisting of a mixture of a first polypropylene copolymer and a second polypropylene copolymer with a talc filler.

This aim and other objects are achieved by the subject matter of the present invention.

### Summary of the invention

A first aspect of the invention relates to a multiwall sheet comprising a composition comprising
i) polyolefin matrices and
ii) nanoclays.

In a second aspect, the present invention relates to a process for preparing a multiwall sheet according to the present invention, wherein said process comprises the step of mechanical mixing of:
i) a polyolefin matrix,
ii) nanoclay and optionally
iii) additives
as defined in the present invention;
where said nanoclay is mixed
- directly with the polyolefin matrix; or
- after mixing with a masterbatch, and subsequently joined to the polyolefin matrix, and wherein said nanoclay is comprised in said masterbatch in the range of 10-60% of the total weight of said masterbatch; at a temperature of at least 180°C, preferably comprised between 180 and 220°C, for a minimum residence time of 90 seconds. Further, preferred embodiments are covered by the dependent claims.

### Detailed description of the invention

### Definitions

### Nanoclay

For the purpose of the present invention, the term "nanoclay" designates a layered mineral, which can be synthetic or natural and is formed by very thin layers that are generally bonded by counterions. The thickness of the layer is approximately 1 nm and the lateral dimensions can vary from 300 Å to several microns, depending on the particulate silicate, on the origin of the clay and on the preparation method (for example, for clay prepared by milling, the lateral size of the components is typically comprised in the 0.1-1.0 mm range). Therefore, the length/thickness ratio of these layers is particularly high, with values of more than 1000.

### Polyolefin matrix

For the purpose of the present invention, the term "polyolefin matrix" is understood to reference a thermoplastic polymer obtained by polymerization of olefins or alkenes.

### Multiwall sheet

For the purpose of the present invention, the term "multiwall sheet" references a sheet made of polymeric material obtained by means of an extrusion process and formed by two strong sheets that are joined together by rods that are perpendicular to said sheets. The main characteristics are light weight and the insulating capabilities due to the presence of empty spaces between the rods.

The present invention relates to a multiwall sheet that comprises a composition comprising
i) polyolefin matrices and
ii) nanoclays.

Preferably, said polyolefin matrices are selected from the group constituted by: polypropylene homopolymer, copolymer, terpolymer, where said polypropylene homopolymer, copolymer, terpolymer comprise an alpha olefin selected from the group constituted by ethylene and a linear or ramified olefin having 3 to 8 carbon atoms.

These polyolefin matrices have a Melt Flow Rate (MFR) comprised between 0.1 and 50 g/10 minutes at 230°C/2.16 kg, preferably an MFR comprised between 0.1 and 10 g/10 minutes, 230°C/2.16 kg; these values are in accordance with the ISO 1133 standard.

The clay is a stratified mineral, preferably a hydrotalcite or a silicate.

In a preferable embodiment, said nanoclays are silicates. Even more preferably, said silicate nanoclays are smectic nanoclays. Even more preferably, said smectic nanoclays are constituted by montmorillonite.

The nanoclays used in the present invention, particularly stratified silicates, generally comprise an organic component fraction.

The organic components preferably used are selected from the group constituted by organic ammonium salts, such as for example hydrogenated tallow ammonium salts.

Preferably, said nanoclays are modified or left unaltered.

The layered clays can be modified with organic molecules, generally by means of counterion exchange reactions. In cationic clays it is possible to introduce organic ammonium ions, which become intercalated between the lamellar layers of the clays, increasing the distance between said layers and facilitating an intercalation of the polymer macromolecules between the clay layers. As has been discussed in several patents, such as WO93/04118, a quaternary ammonium salt which converts the clay from hydrophilic to organophilic is introduced as a clay modifying agent.

Here is an example of a modifying molecule:

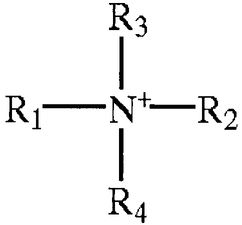

The segment R₁ is an alkyl chain that has 2 to 22 carbon atoms and is linear or ramified, while the groups R₂, R₃, R₄ are selected from the group constituted by: hydrogen, alkyl groups and aryl group, preferably an alkyl group having 2 to 8 carbon atoms.

Preferably, the nanoclay is comprised in the interval 0.1-6.0% by weight, for 100 parts by weight of polyolefin matrix, considering only the inorganic fraction. All the quantities referenced refer to the dehydrated nanoclay.

Preferably, the composition of the present invention comprises one or more additives selected from the group constituted by: compatibilizers, UV stabilizers, heat stabilizers, antistatic agents, flame retardants, nucleating agents and pigments. Even more preferably, said additive is a compatibilizer. Said compatibilizer facilitates the dispersion of the nanoclay within the polymeric matrix. This compatibilizer preferably has the same chemical nature as the polymeric matrix, but is modified with polar groups on the inside, preferably with a carboxylic acid or an anhydride. It is preferable to use a copolymer that is grafted to a polymeric matrix formed by a polyolefin with an olefin comprised between ethylene and an alpha olefin having 3 to 8 carbon atoms.

The olefin matrix of the compatibilizer is preferably the same as that of the main component. The polar component is grafted directly into the polyolefin matrix with a content between 0.5 and 3.0% with respect to the total weight of the grafted polyolefin.

Preferably, the compatibilizer that is used is a polypropylene grafted with maleic anhydride.

Preferably, the compatibilizer is comprised in the interval 0.5-1% by weight of the polyolefin matrix.

In a second aspect, the present invention relates to a process for preparing multiwall sheets according to the present invention.

It should be noted that the main difficulties in obtaining a nanocomposite are linked to the spontaneous aggregation of the nanoparticles; accordingly, effective dispersion (exfoliation) thereof within the polymeric material is rather difficult to achieve.

This problem has been solved with the process according to the present invention, wherein said process comprises the steps of
I) mixing:
I.i) of the polyolefin matrix;
I.ii) of the nanoclay and optionally
I.iii) of additives
   as defined above;
   wherein said nanoclay is mixed
   - directly with the polyolefin matrix; or
   - after mixing in a masterbatch and subsequently joined to the polyolefin matrix, and wherein said nanoclay is comprised in said masterbatch in the range of 10-60% by weight of the total weight of said masterbatch;
Ii) extrusion of the mix obtained from step I);
   at a temperature of at least 180°C, comprised preferably between 180 and 220°C, for a minimum residence time of 90 seconds.

Preferably, said polyolefin matrix is in the molten state.

Preferably, the multiwall sheet of the present invention is prepared by means of an extruder of the single- or twin-screw type, preferably with a high value of shear stress regardless of the L/D ratio, where L/D references the ratio between the length of the threaded screw portion and the nominal diameter of the screw, which is normally used to express the nominal length of the screw.

The process for mixing in the molten state disperses the nanofiller uniformly, leading to a high degree of exfoliation of the mineral filler.

The extrusion process has been optimized so as to ensure the exfoliation and good dispersion of the fillers within the matrix, considering the parameters of temperature, residence time of the mix in the mixing machine and shear to be applied internally.

The temperature varies between 180 and 220°C; the residence time is a function of the type and characteristics of the extruder; the minimum time is 90 seconds and can be even longer than 600 seconds. As regards shear, it is necessary to ensure a shear that must be medium-high.

If one proceeds with a masterbatch that contains a well dispersed and exfoliated nanoclay, the process can also be performed with a single-screw extruder, with appropriate optimization of the process parameters.

The present invention therefore allows finding a good compromise between the improvement of these properties, even with a low nanofiller content, and partial elimination of the defects that are normally present during the sheet production step.

The multiwall sheet that derives from the process mentioned above can have various gram weights in a range comprised between 160 and 10,000 g/m², preferably between 200 and 4,000 g/m².

The field of application of this product is in the advertising, pharmaceutical, construction, food, agriculture, packaging and electrical household appliance sectors.

The addition of nanoclays improves, albeit with small percentages, mechanical properties such as:
- modulus of elasticity,
- compression modulus,
- tensile strength;
- permeability to gases (CO₂, N₂, O₂, water vapor) of the polyolefin matrix;
- flame resistance properties, since nanoclays aid flame retardants;
- rheological control of the polyolefin matrix during the step of production in the molten state;
- affinity of the sheet to polar substances that normally have limited affinity;
- antibacterial properties, imparted by means of adapted modifications to the inorganic filler.

The following are examples aimed at better explaining the object of the present invention.

### EXAMPLES

### Example 1

A sample containing 10% by weight of 50% by weight masterbatch of modified montmorillonite and PP copolymer of the TotalFina PPC 3336 type, with an MFR equal to 1.3 g/10 min, with a composition equal to 87% by weight, AntiUV master with 3% composition by weight fed by means of a gravimetric dosage unit within a single-screw extruder with an L/D ratio equal to 33.

The operating parameters are:
- screw temperature: 215°C;
- pressure 60 bars;
- screw rotation rate: 36 rpm;
- flow rate in output: 660 kg/h.

The product in output at the outlet of the extruder is processed so as to yield a multiwall sheet with a thickness of 3.5 mm and a gram weight of 1200 g/square meter.

Tests for the mechanical characterization of the resulting nanocomposite sample (Sample 2), compared with the untreated type TotalFina PPC3336 copolymer (Sample 1), were performed.

These mechanical properties were performed with the following method:
for the traction tests, specimens obtained directly from the multiwall sheet with a thickness of 3.5 mm and with a size of 200 x 50 mm were used. The measurement was performed at a deformation rate equal to 1 mm/min and at a temperature of 23°C. For the compression tests, the specimens had a size of 50 x 50 mm.

Gas permeability was determined in accordance with the DIN 53380 standard, at the temperature of 23°C with samples with a thickness of 100 µm and characterized by 0% relative humidity by weight.

| Sample | 1 | 2 |
|---|---|---|
| Compressive Yield Strength (MPa) | 21.88 | 23.76 |
| Tensile modulus (MPa) | 600 | 715 |
| O₂ transmission rate (cm3/m²xdxbar) | 454 | 369 |
| N₂ transmission rate (cm3/m²xdxbar) | 206 | 158 |
| CO₂ transmission rate (cm3/m²xdxbar) | 1530 | 1307 |

### Example 2

A sample containing 6% by weight of modified montmorillonite, copolymer of the type of TotalFina PPC3336, with an MFR of 1.3 g/10 min with a composition equal to 91% by weight, polypropylene grafted to maleic anhydride (such as Polybond 3200 by Chemtura) with a composition equal to 3% by weight, introduced by means of a gravimetric dosage unit within a twin-screw extruder model ZSK 18 with an L/D ratio equal to 30.

The operating parameters are:
- screw temperature: 200°C;
- pressure: 22 bars;
- number of screw turns: 130 RPM;
- flow rate in output: 4.5 kg/h;
- residence time: 180 seconds;
- shear rate = 120 sec-1.

The mechanical properties were determined in accordance with the ISO 527-2 standard on specimens obtained by injection molding with dimensions of 170 x 10 x 4 mm.

Tensile strength at yield (in MPa) was determined in accordance with the ISO 527-2 standard on specimens obtained by injection molding with dimensions of 170 x 10 x 4 mm. The measurement was performed at a deformation rate of 50 mm/min and at a temperature of 23°C.

The tensile modulus was determined in accordance with the ISO 527-2 standard on specimens obtained by injection molding with dimensions of 117 x 10 x 4 mm. The measurement was performed at a deformation rate equal to 1 mm/min and at a temperature of 23°C.

Gas permeability was determined in accordance with the DIN 53380 standard, at a temperature of 23°C, with samples having a thickness of 100 µm and 0% by weight relative humidity.

The comparison was made between the type TotalFina PPC3336 copolymer as is (sample 1) and the resulting nanocomposite material mixture obtained and listed in example 2 (sample 2).

| Sample | 1 | 2 |
|---|---|---|
| Tensile Strength at Yield (MPa) | 24.00 | 27.13 |
| Tensile modulus (MPa) | 1300 | 1700 |
| O₂ transmission rate (cm3/m²xdxbar) | 454 | 201 |
| N₂ transmission rate (cm3/m²xdxbar) | 206 | 45 |
| CO₂ transmission rate (cm3/m²xdxbar) | 1530 | 786 |

### Example 3

Sample containing 10% by weight of a masterbatch with 20% montmorillonite modified with silver salts capable of giving antibacterial properties to the sheet, copolymer of the TotalFina PPC 3336 type, with an MFR of 1.3 g/10 minutes with a composition equal to 90%, noted by means of a gravimetric dosage device inside a dual-screw model ZSK 18 extruder with an L/D ratio equal to 30.

The operating parameters are:
- screw temperature: 200°C;
- pressure: 20 bars;
- number of screw turns: 130 rpm;
- output flow rate: 2.5 kg/hour;
- residence time: 180 seconds;
- shear rate = 100 seconds-1.

This sample was analyzed according to the JIS Z 2801 standard and was found to be a biocidal and thus can be classified as an antibacterial material.

## Claims

1. A multiwall sheet comprising a composition comprising
i) polyolefin matrices and
ii) nanoclays.

2. A multiwall sheet according to claim 1, wherein said polyolefin matrices are selected from the group constituted by: polypropylene homopolymer, copolymer, terpolymer, where said polypropylene homopolymer, copolymer, terpolymer comprise an alpha olefin selected from the group constituted by ethylene and a linear or ramified olefin having 3 to 8 carbon atoms.

3. The multiwall sheet according to one or more of the preceding claims, wherein said nanoclay is comprised between 0.1 and 6% by weight of inorganic component for 100 parts by weight of polyolefin matrix.

4. The multiwall sheet according to one or more of the preceding claims, wherein said nanoclays are modified.

5. The multiwall sheet according to one or more of the preceding claims, wherein said nanoclays are silicates.

6. The multiwall sheet according to claim 5, wherein said silicate nanoclays are smectic nanoclays.

7. The multiwall sheet according to claim 6, wherein said smectic nanoclays are montmorillonite.

8. The multiwall sheet according to one or more of the preceding claims, wherein said composition comprises one or more additives selected from the group constituted by: compatibilizers, UV stabilizers, heat stabilizers, antistatic agents, flame retardants, nucleating agents and pigments.

9. The multiwall sheet according to claim 8, wherein said additive is a compatibilizer.

10. The multiwall sheet according to one or more of claims 8-9, wherein said compatibilizer is present between 0.5 and 3% in parts by weight of the polyolefin matrix.

11. A process for preparing a multiwall sheet according to one or more of the preceding claims, wherein said process comprises the steps of
I) mixing:
I.i) said polyolefin matrix;
I.ii) said nanoclay and optionally
I.iii) said additives
wherein said nanoclay is mixed
- directly with the polyolefin matrix; or
- after mixing in a masterbatch and subsequently joined to the polyolefin matrix, and wherein said nanoclay is comprised in said masterbatch in the range of 10-60% of the total weight of said masterbatch; Ii) extrusion of the mix obtained from step I);
at a temperature of at least 180°C, comprised preferably between 180 and 220°C, for a minimum residence time of 90 seconds.

12. The process according to claim 11, wherein said polyolefin matrix is in the molten state.

## Patentansprüche

1. Eine mehrwandige Folie, die eine Zusammensetzung umfasst, welche Folgendes umfasst:
i) Polyolefin-Matrizen und
ii) Nanoerden.

2. Eine mehrwandige Folie gemäß Anspruch 1, worin die Polyolefin-Matrizen gewählt sind aus der Gruppe bestehend aus: Polypropylenhomopolymer, -copolymer, -terpolymer, wobei das Polypropylenhomopolymer, -copolymer, -terpolymer ein alpha-Olefin umfassen, das gewählt ist aus der Gruppe bestehend aus Ethylen und einem linearen oder verzweigten Olefin mit 3 bis 8 Kohlenstoffatomen.

3. Die mehrwandige Folie gemäß einem oder mehreren der obigen Ansprüche, worin die Nanoerde zwischen 0,1 und 6 Gewichtsprozent anorganische Komponente je 100 Gewichtsanteile Polyolefinmatrix beträgt.

4. Die mehrwandige Folie gemäß einem oder mehreren der obigen Ansprüche, worin die Nanoerden modifiziert sind.

5. Die mehrwandige Folie gemäß einem oder mehreren der obigen Ansprüche, worin die Nanoerden Silikate sind.

6. Die mehrwandige Folie gemäß Anspruch 5, worin die Silikat-Nanoerden smektische Nanoerden sind.

7. Die mehrwandige Folie gemäß Anspruch 6, worin die smektischen Nanoerden Montmorillonit sind.

8. Die mehrwandige Folie gemäß einem oder mehreren der obigen Ansprüche, worin die Zusammensetzung einen oder mehrere Zusatzstoffe umfasst, die gewählt sind aus der Gruppe bestehend aus Verträglichkeitsvermittlern, UV-Stabilisatoren, Wärmestabilisatoren, Antistatika, Flammverzögerungsmitteln, Keimbildnern und Pigmenten.

9. Die mehrwandige Folie gemäß Anspruch 8, worin der Zusatzstoff ein Verträglichkeitsvermittler ist.

10. Die mehrwandige Folie gemäß einem oder mehreren der Ansprüche 8-9, worin der Verträglichkeitsvermittler mit zwischen 0,5% und 3% in Gewichtsanteilen der Polyolefinmatrix vorhanden ist.

11. Ein Verfahren zur Herstellung einer mehrwandigen Folie gemäß einem oder mehreren der obigen Ansprüche, worin das Verfahren folgende Schritte umfasst:
I) Mischen:
I.i) der Polyolefinmatrix;
I.ii) der Nanoerde und wahlweise
I.iii) der Zusatzstoffe,
worin die Nanoerde gemischt wird:
- direkt mit der Polyolefinmatrix; oder
- nach dem Mischen in einem Masterbatch und anschließend mit der Polyolefinmatrix verbunden wird, worin die Nanoerde in dem Masterbatch in dem Bereich von 10-60% des Gesamtgewichts des Masterbatches vorhanden ist; Ii) Extrudieren der in Schritt I) gewonnenen Mischung;
bei einer Temperatur von mindestens 180°C, vorzugsweise zwischen 180 und 220°C, für eine Mindest-Verweilzeit von 90 Sekunden.

12. Das Verfahren gemäß Anspruch 11, worin die Polyolefinmatrix sich im geschmolzenen Zustand befindet.

## Revendications

1. Feuille multiparoi, qui comprend une composition comprenant :
i) des matrices de polyoléfine,
ii) et des nanoargiles.

2. Feuille multiparoi conforme à la revendication 1, dans laquelle lesdites matrices de polyoléfine sont choisies dans l'ensemble formé par les polypropylènes homopolymères, copolymères et terpolymères, lesquels polypropylènes homopolymères, copolymères et terpolymères comportent une alpha-oléfine choisie dans l'ensemble formé par l'éthylène et une oléfine linéaire ou ramifiée comportant de 3 à 8 atomes de carbone.

3. Feuille multiparoi conforme à l'une ou plusieurs des revendications précédentes, dans laquelle ladite nanoargile représente de 0,1 à 6 % en poids de composant inorganique pour 100 parties en poids de matrice de polyoléfine.

4. Feuille multiparoi conforme à l'une ou plusieurs des revendications précédentes, dans laquelle lesdites nanoargiles sont modifiées.

5. Feuille multiparoi conforme à l'une ou plusieurs des revendications précédentes, dans laquelle lesdites nanoargiles sont des silicates.

6. Feuille multiparoi conforme à la revendication 5, dans laquelle lesdites nanoargiles silicates sont des nanoargiles smectiques.

7. Feuille multiparoi conforme à la revendication 6, dans laquelle lesdites nanoargiles smectiques sont de la montmorillonite.

8. Feuille multiparoi conforme à l'une ou plusieurs des revendications précédentes, dans laquelle ladite composition comprend un ou plusieurs adjuvants choisis dans l'ensemble formé par les suivants :
agents de compatibilisation, stabilisants anti-UV, thermostabilisants,
agents antistatiques, agents ignifugeants, agents de nucléation, et pigments.

9. Feuille multiparoi conforme à la revendication 8, dans laquelle ledit adjuvant est un agent de compatibilisation.

10. Feuille multiparoi conforme à l'une ou plusieurs des revendications 8 et 9, dans laquelle ledit agent de compatibilisation se trouve présent en une proportion de 0,5 à 3 %, en parties en poids par rapport à la matrice de polyoléfine.

11. Procédé de fabrication d'une feuille multiparoi conforme à l'une ou plusieurs des revendications précédentes, lequel procédé comporte les étapes suivantes :
I) mélanger
I.i) ladite matrice de polyoléfine,
I.ii) ladite nanoargile,
I.iii) et en option, lesdits adjuvants,
étant entendu que ladite nanoargile est mélangée
- directement avec la matrice de polyoléfine,
- ou après avoir été incorporée dans un mélange-maître et ensuite jointe à la matrice de polyoléfine, étant entendu que la nanoargile se trouve dans ledit mélange-maître en une quantité représentant de 10 à 60 % du poids total dudit mélange-maître,
II) et extruder le mélange obtenu à l'issue de l'étape (I),
à une température d'au moins 180 °C, et de préférence de 180 à 220 °C, durant un temps de séjour minimal de 90 secondes.

12. Procédé conforme à la revendication 11, dans lequel ladite matrice de polyoléfine se trouve à l'état fondu.
